# EUROPÄISCHE PATENTSCHRIFT

(11) **EP 1 253 023 B1**
(45) Veröffentlichungstag und Bekanntmachung des Hinweises auf die Patenterteilung: **21.07.2004**
(21) Anmeldenummer: 01109944.7
(22) Anmeldetag: 24.04.2001
(51) Int. Cl.: B60B 33/04

(54) **Gefederte Lenkrolle**
Castor with elastic suspension
Roulette à suspension élastique

(43) Veröffentlichungstag der Anmeldung: 30.10.2002
(73) Patentinhaber: Heinrich Blickle GmbH & Co. KG, 72348 Rosenfeld (DE)
(72) Erfinder:
(74) Vertreter: Säger, Manfred, Dipl.-Ing.

(56) Entgegenhaltungen:
- EP-A- 0 601 581
- EP-A- 0 743 199
- US-A- 3 041 656
- US-A- 4 312 096
- US-A- 5 394 589
- US-A- 5 448 796

## Beschreibung

Die Erfindung betrifft eine gefederte Lenkrolle gemäß dem Oberbegriff des Hauptanspruchs, nämlich eine solche mit einem um eine Laufradachse drehbaren Laufrad und mit einem Lenkgabelkopf, der um eine rechtwinklig zu der Laufradachse angeordnete Rotationsachse rotieren kann, wobei jedes Ende der beiden zueinander entgegengesetzt angeordneten Enden der Laufradachse an dem freien Ende einer Schwinge, die beide im wesentlichen parallel zueinander verlaufen, angeordnet ist und die anderen Enden beider Schwingen unter Zwischenordnung einer Feder-Dämpfungseinheit um eine Schwenkachse schwenkbar an dem Lenkgabelkopf gelagert ist, und wobei die Feder-Dämpfungseinheit mit ihrer einen Seite starr mit dem Lenkgabelkopf und mit ihrer anderen Seite ebenfalls starr mit den anderen Enden der Schwingen verbunden ist und dazwischen einen elastisch verformbaren Elastomerformkörper mit zumindest zwei Flächen aufweist, deren eine formreibungs- und/oder stoffschlüssig mit der einen Seite und deren andere Fläche form-, reibungs- und/oder stoffschlüssig mit der anderen Seite der Feder-Dämpfungseinheit zusammenwirkt.

Eine solche gattungsgemässe gefederte Lenkrolle ist bekannt (EP-A-0 601 581). Infolge der beiderseits des Lenkgabelkopfes angeordneten, beiden Elastomerformkörper der Feder-Dämpfungseinheit ist einerseits eine gewisse Mindestbreite in Richtung der Erstreckung der Laufradachse, zum anderen zwei die Feder-Dämpfungseinheit zwischen sich aufnehmende Laufräder erforderlich, wodurch diese bekannten Lenkrollen breit bauen und was sie überdies teuer macht.

Der Erfindung liegt deshalb die Aufgabe zugrunde, gattungsgemässe Lenkrollen vorzuschlagen, die kompakt und kostengünstig aufzubauen sind.

Diese Aufgabe wird bei einer gefederten Lenkrolle gemäß dem Oberbegriff des Hauptanspruchs erfindungsgemäß durch dessen kennzeichnende Merkmale nämlich dadurch gelöst, dass die Feder-Dämpfungseinheit als Hülsenfeder mit zwei zueinander konzentrischen Hülsen verschieden großen Durchmessers und der dazwischen angeordneten Elastomerformkörper als Hohlzylinder ausgebildet ist und dass dieser mit seiner äußeren sowie mit seiner inneren zylindermantelförmigen Fläche an die beiden Hülsen stoffschlüssig angeklebt oder formschlüssig über Vorsprünge und Vertiefungen gegen Verdrehen gesichert ausgebildet ist.

Hierbei wird nach Lehre der Erfindung also die Hülsenfeder mit zwei zueinander konzentrischen Hülsen verschieden großen Durchmessers als ein einziges Bauteil in Form der Feder-Dämpfungseinheit zwischen den Lenkgabelkopf einerseits und dem anderen Ende der Schwinge jeweils angeordnet. Somit kann für die gefederten Lenkrolle ein kompakter und kostengünstiger Aufbau in Form des einzigen Bauteils erzielt werden.

Als zweckmäßige Ausgestaltung können an der einen Scheibe Einfeder- und/oder Ausfederungsanschläge vorgesehen sein, um den Feder-Dämpfungsweg zu begrenzen bzw. den Einfederungs- sowie den Ausfederungsanschlag festzulegen.

Ein bevorzugtes Ausführungsbeispiel der Erfindung wird nachfolgend unter Bezugnahme auf die Zeichnung näher erläutert. In dieser zeigt:
- Figur 1: eine nicht geschützte Lenkrolle, in perspektivischer Darstellung;
- Figur 2: die Lenkrolle gemäss Fig. 1, in Draufsicht;
- Figur 3: die Lenkrolle gemäß Fig. 2, im Schnitt III-III;
- Figur 4: die Lenkrolle gemäß Fig. 3, im Schnitt IV-IV;
- Figur 5: eine nicht geschützte erste Ausführungsform einer Feder-Dämpfungseinheit, im Schnitt (a) und in Seitenansicht (b);
- Figur 6: eine nicht geschützte zweite Ausführungsform einer Feder-Dämpfungseinheit, als perspektivisches Sprengbild;
- Figur 7: eine erfindungsgemäße Ausführungsform einer Feder-Dämpfungseinheit, im Schnitt (a) und in Seitenansicht (b);
- Figur 8: eine nicht geschützte vierte Ausführungsform einer Feder-Dämpfungseinheit;
- Figur 9: die Dämpfungseinheit gemäß Fig. 8 in schematischer perspektivischer Darstellung; und
- Figur 10: die Lenkrolle gemäß Fig. 1 im schematischen Sprengbild.

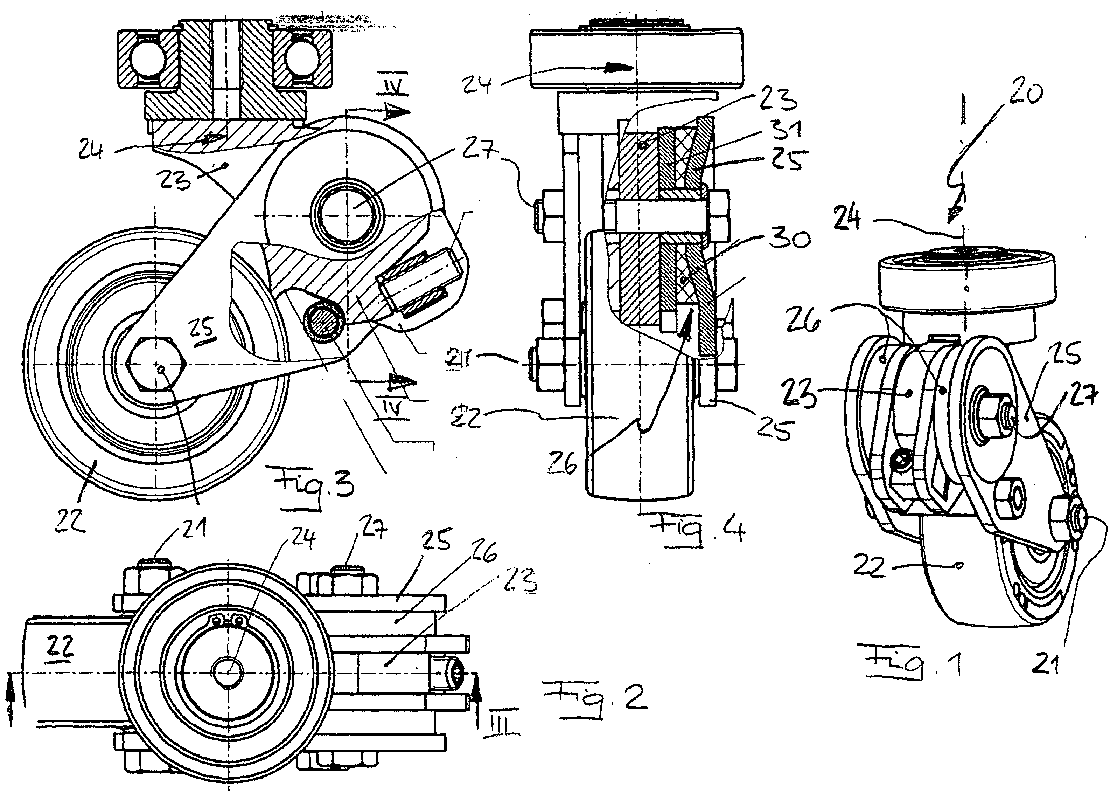

Die in Fig. 1 insgesamt mit 20 bezeichnete gefederte Lenkrolle weist eine insgesamt mit 21 bezeichnete Laufradachse für das Laufrad 22 und einen Lenkgabelkopf 23 auf, der um eine rechtwinklig zu der Laufradachse 21 angeordnete Rotationsachse 24 rotieren kann.

An den beiden Seiten des Lenkgabelkopfes 23 sind die Enden zweier Schwingen 25, an deren beiden Enden die zueinander entgegengesetzt angeordneten Enden der Laufradachse 21 angeordnet ist. Hierbei sind die beiden Schwingen 25 unter Zwischenordnung einer Feder-Dämpfungseinheit 26 um eine Schwenkachse 27 schwenkbar an dem Lenkgabelkopf 23 gelagert. Die Schwenkachse 27 ist hierbei parallel zu der Laufradachse 21 angeordnet und sind die beiden Schwingen 25 im wesentlichen zueinander parallel angeordnet.

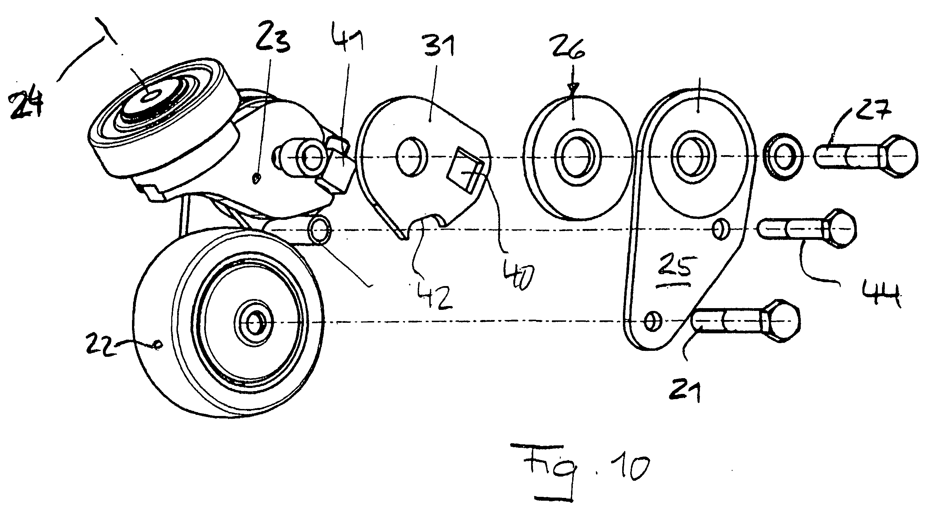

Die Feder-Dämpfungseinheit 26 ist mit ihrer einen Seite starr mit dem Lenkgabelkopf 23 und mit ihrer anderen Seite starr mit den anderen Enden der Schwingen 25 verbunden und weist dazwischen einen elastisch verformbaren Elastomerformkörper (Figs. 5 bis 9) mit zumindest zwei Flächen auf, deren eine form-, reibungs- und/oder stoffschlüssig mit der einen Seite und deren andere Fläche ebenfalls form-, reibungs- und/oder stoffschlüssig mit der anderen Seite der Feder-Dämpfungseinheit 26 zusammenwirkt.

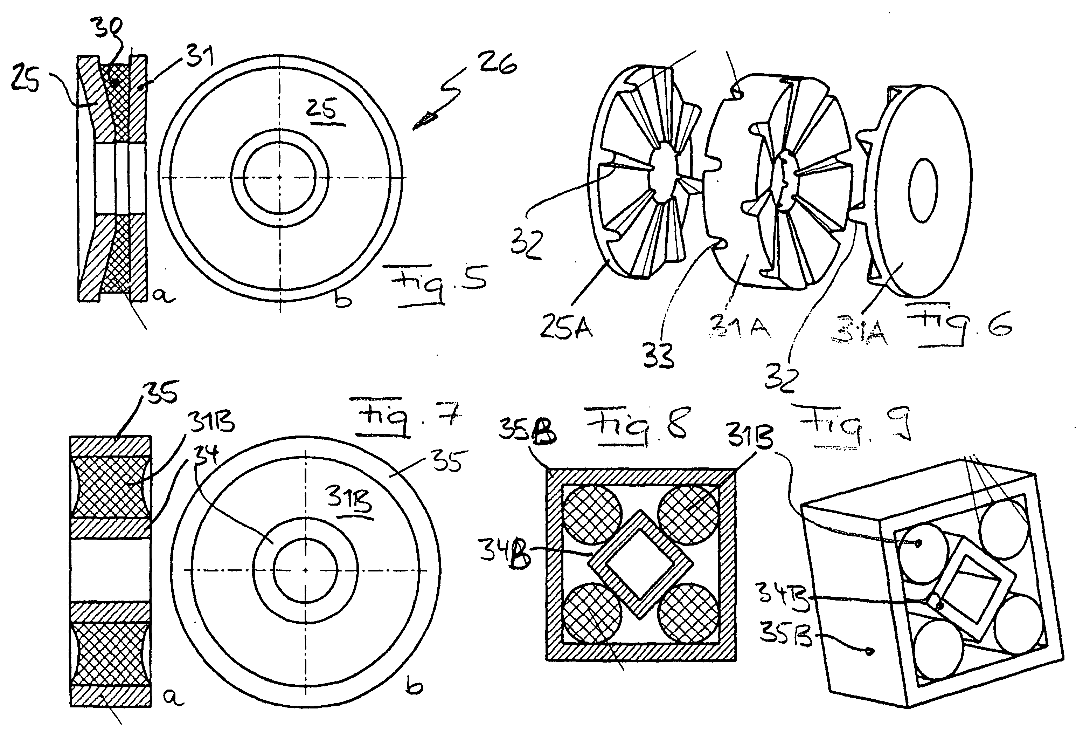

Die perspektivisch dargestellte gefederte Lenkrolle 20 ist in den Fig. 2 bis 4 näher dargestellt. Gleiche Bezugszeichen bezeichnen dort das gleiche Bauteil.

Hierbei ist, wie besonders gut in Fig. 4 ersichtlich ist, die Feder-Dämpfungseinheit 26 mit einem scheibenförmigen Elastomerformkörper 30 versehen, auf dessen einer Seite eine Scheibe 31 und auf dessen andere Seite die Schwinge 25 vorgesehen ist. Diese Ausbildung ist in Fig. 5 (a) und (b) näher dargestellt. Hierbei ist der scheibenförmige Elastomerformkörper 30 mit seinen zwei Flächen (Stirnflächen) an der einen Scheibe 31 stoffschlüssig angeklebt und mit seiner anderen Seite an die Schwinge 25 ebenfalls stoffschlüssig angeklebt. Somit sind die beiden Teile gegeneinander nur beschränkt drehbar. Infolge der Eigenschaften des Elastomerformkörpers 30 ergibt sich die Feder-Dämpfungseinheit als Scheibenfeder.

Eine dazu alternative Ausführungsform ist in der Fig. 6 dargestellt. Dort ist ein Elastomerformkörper 31A zwischen den beiden Scheiben 25A und 31A mit Vorsprüngen 32 und Vertiefungen 33 an dem Formkörper vorgesehen.

Anstelle der beiden vorstehend genannten Scheibenfedern (Fig. 5 und 6) ist es auch nach Lehre der Erfindung möglich, eine Hülsenfeder (Fig. 7) mit zwei zueinander konzentrisch angeordneten Hülsen 34, 35 verschieden großen Durchmessers und einem dazwischen angeordneten Hohlzylinder 31B als Elastomerformkörper anzuordnen, dessen äußere Mantelfläche mit der äußeren Hülse und dessen innere Fläche als Mantel mit der inneren Hülse 34 durch Kleben stoffschlüssig verbunden ist.

Auch eine Ausführungsform als Drehfeder gemäß den Fig. 8 und 9 ist möglich, wobei hier ebenfalls zwei im Querschnitt quadratische Hülsen 34B und 35B und dazwischen vier zylinderförmige Elastomerformkörper 31B vorgesehen sind. Mit zumindest drei Flächen des Mantels liegt jeder zylinderförmige Elastomerformkörper 31B an den äußeren und inneren Hülsen 34B und 35B insgesamt an. Hierdurch wird auch eine Feder-Dämpfungswirkung erreicht. Ferner zeigt das Sprengbild gemäß Figur 10 die Lenkrolle gemäss Figur 1 näher. Deutlich ersichtlich ist der Lenkgabelkopf 23, an dem unter Zwischenschaltung der einen Scheibe 31 der Scheibenfeder als Feder-Dämpfungseinheit 26 die Schwinge 25 um die Schwenkachse 27 schenkbar gelagert ist. Die Scheibe 31 ist gegen Drehen gesichert mit einer Ausnehmung 40 versehen, durch die ein entsprechend geformter Vorsprung 41 an dem Lenkgabelkopf 23 hindurchgreift. Die Scheibe 31 ist mit einem einen Ein- und Ausfederungsanschlag 42 festlegenden Ausnehmung versehen. In diesem Bereich ist eine die beiden Schwingen 25 verbindender Bolzen 44 vorgesehen, der an den beiden Anschlägen der Vertiefung in der Scheibe 31 zur Anlage kommt.

## Patentansprüche

1. Gefederte Lenkrolle mit einem um eine Laufradachse (21) drehbaren Laufrad (22) und mit einem Lenkgabelkopf (23), der um eine rechtwinklig zu der Laufradachse angeordnete Rotationsachse (24) rotieren kann, wobei jedes Ende der beiden zueinander entgegengesetzt angeordneten Enden der Laufradachse an dem freien Ende einer Schwinge (25), die beide im wesentlichen parallel zueinander verlaufen, angeordnet ist und die anderen Enden beider Schwingen unter Zwischenordnung einer Feder-Dämpfungseinheit (26) um eine Schwenkachse (27) schwenkbar an dem Lenkgabelkopf (23) gelagert ist, und wobei die Feder-Dämpfungseinheit (26) mit ihrer einen Seite starr mit dem Lenkgabelkopf (23) und mit ihrer anderen Seite ebenfalls starr mit den anderen Enden der Schwingen (25) verbunden ist und dazwischen einen elastisch verformbaren Elastomerformkörper (31B) mit zumindest zwei Flächen aufweist, deren eine Eläche form-, reibungs- und/oder stoffschlüssig mit der einen Seite und deren andere Fläche form-, reibungs- und/oder stoffschlüssig mit der anderen Seite der Feder-Dämpfungseinheit. (26) zusammenwirkt, **dadurch gekennzeichnet, dass** die Feder-Dämpfungseinheit (26) als Hülsenfeder mit zwei zueinander konzentrischen Hülsen (34,35) verschieden großen Durchmessers und der dazwischen angeordneten Elastomerformkörper (31B) als Hohlzylinder ausgebildet ist und dass dieser mit seiner äußeren sowie mit seiner inneren zylindermantelförmigen Fläche an die beiden Hülsen (34,35) stoffschlüssig angeklebt oder formschlüssig über Vorsprünge und Vertiefungen gegen Verdrehen gesichert ausgebildet ist.

2. Rolle nach Anspruch 1, **dadurch gekennzeichnet, dass** die Schwenkachse (27) im wesentlichen parallel zu der Laufradachse (21) angeordnet ist.

3. Rolle nach einem der Ansprüche 1 bis 2, **dadurch gekennzeichnet, dass** die beiden Schwingen (25) über einen Bolzen (44) miteinander verbunden sind und dieser für einen bezüglich des Lenkgabelkopfes (23) starr angeordneten Ein- und Ausfederungsanschlag (42) einen Einfederhub bildet.

## Claims

1. Sprung swivel castor with a running wheel (22) rotatable about a running-wheel axis (21) and with a swivel head (23) rotatable about a rotational axis (24) arranged at right angles to the running wheel axis, wherein each of the two mutually opposing ends of the running wheel axis is disposed at the free end of a rocker (25), both rockers running essentially parallel to one another, and the other ends of both rockers being attached rotatably about a rocker axis (27) via an intermediate arrangement of a spring shock-absorbing unit (26) to the swivel head (23), and wherein the spring shock-absorbing unit (26) is rigidly connected at one side to the swivel head (23) and at the other side to the other ends of the rockers (25) and provides an interposed, resiliently deformable, formed elastomer body (31B) with at least two surfaces, of which one surface cooperates in a form-fit, friction-locking and/or substance-bonded manner with one side of the spring shock-absorbing unit, and the other surface of which cooperates in a form-fit, friction-locking and/or substance-bonded manner with the other side of the spring shock-absorbing unit (26),
**characterised in that**
the spring shock-absorbing unit (26) is designed as a sleeve spring with two mutually concentric sleeves (34, 35) of different diameter, that the interposed, formed elastomer body (31B) is designed as a hollow cylinder, and that this hollow cylinder is designed with its external and internal cylindrical-casing-shaped surfaces either glued via a substance-bond or attached in a form-fit manner via projections and indentations to the two sleeves (34, 35) in order to prevent rotation.

2. Castor according to claim 1,
**characterised in that**
the rocker axis (27) is arranged essentially parallel to the running wheel axis (21).

3. Castor according to any one of claims 1 to 2,
**characterised in that**
the two rockers (25) are connected to one another via a bolt (44), and that this bolt provides a spring-deflection stroke relative to a spring-deflection and return stop (42) arranged rigidly with reference to the swivel head (23).

## Revendications

1. Poulie de renvoi à ressorts pourvue d'une roue tournante (22) pouvant tourner autour d'un axe de roue tournante (21) et d'une tête de fourche tournante (23) pouvant tourner autour d'un axe de rotation (24) disposé à angle droit par rapport à l'axe de roue tournante, moyennant quoi chaque extrémité des deux extrémités d'axe de roue tournante disposées de manière opposée l'une par rapport à l'autre est disposée au niveau de l'extrémité libre d'un bielle oscillante (25), laquelle s'étend de manière sensiblement parallèle à l'autre bielle oscillante, et les autres extrémités des deux bielles oscillantes sont disposées au niveau de la tête de fourche tournante (23) de manière à pouvoir pivoter autour d'un axe de pivotement (27) en intercalant un bloc d'amortissement sur ressort (26), et moyennant quoi le bloc d'amortissement sur ressort (26) est relié avec son côté rigide à la tête de fourche tournante (23) et avec son autre côté également rigide aux autres extrémités des bielles oscillantes (25) et présente entre ces deux côtés un corps moulé en élastomère (31B) déformable de manière élastique présentant au moins deux faces, dont une face entre en interaction par complémentarité de forme, de frottement et/ou de matière avec ce côté et l'autre face entre en interaction par complémentarité de forme, de frottement et/ou de matière avec l'autre côté du bloc d'amortissement sur ressort (26), **caractérisée en ce que** le bloc d'amortissement sur ressort (26) est configuré comme un ressort à enveloppes pourvu de deux enveloppes (34, 35) concentriques l'une par rapport à l'autre de grands diamètres différents et que le corps moulé en élastomère (31B) intercalé est configuré comme un cylindre creux et **en ce que** celui-ci est collé par complémentarité de matière avec sa surface extérieure en forme de corps de cylindre ainsi qu'avec sa surface intérieure au niveau des deux enveloppes (34, 35) ou est configuré par complémentarité de forme, au moyen de saillies et de creux, de manière à ne pas pouvoir être tordu.

2. Poulie selon la revendication 1, **caractérisée en ce que** l'axe de rotation (27) est disposé pour l'essentiel parallèlement à l'axe de roue tournante (21).

3. Poulie selon l'une quelconque des revendications 1 ou 2, **caractérisée en ce que** les deux bielles oscillantes (25) sont reliées entre elles par l'intermédiaire d'un boulon (44) et que celui-ci forme un levage de ressort pour une butée d'amortissement d'entrée et de sortie (42) disposée de manière rigide par rapport à la tête de fourche tournante (23).
